Europäisches Patentamt

European Patent Office

Office européen des brevets

(11) Publication number: **0 479 525 A2**

# (12) EUROPEAN PATENT APPLICATION

(21) Application number: **91308933.0**

(22) Date of filing: **30.09.91**

(51) Int. Cl.5: **G05B 19/33**

(30) Priority: **01.10.90 JP 264467/90**

(43) Date of publication of application:
**08.04.92 Bulletin 92/15**

(84) Designated Contracting States:
**DE FR GB**

(71) Applicant: **KABUSHIKI KAISHA YASKAWA DENKI**
**2-1, Kurosaki-shiroishi, Yahatanishi-ku**
**Kitakyushu-shi, Fukuoka 806 (JP)**

(72) Inventor: **Kohno, Toshiyuki, c/o Kabushiki K. Yaskawa Denki**
**2-1, Kurosaki-Shiroishi, Yahatanishi-ku**
**Kitakyushu-shi, Fukuoka 806 (JP)**
Inventor: **Yamasaki, Tadaaki, c/o Kabushiki K. Yaskawa Denki**
**2-1, Kurosaki-Shiroishi, Yahatanishi-ku**
**Kitakyushu-shi, Fukuoka 806 (JP)**
Inventor: **Iwakane, Takanobu, c/o Kabushiki K. Yaskawa Denki**
**2-1, Kurosaki-Shiroishi, Yahatanishi-ku**
**Kitakyushu-shi, Fukuoka 806 (JP)**

(74) Representative: **Molyneaux, Martyn William et al**
**c/o Ladas & Parry, Altheimer Eck 2**
**W-8000 München 2 (DE)**

(54) **Absolute position measuring resolver apparatus with backup means in power failure.**

(57) A resolver apparatus for measuring an absolute position of a rotating body comprises a resolver (1) including a rotor having a single-phase exciting coil (11) and adapted to be coupled with the rotating body (20) and a stator having detection coils (12a, 12b) for two phases different from each other by 90°, a first circuit (2) for exciting the exciting coil by a pulse signal having a selected frequency, and a second circuit for calculating an absolute position of the rotor measured from a reference angular position on the basis of output signals of the detection coils, wherein a selected area including the first circuit and at least a part of the second circuit is normally energized by an external power supply (22) and when the external power supply is disabled, is energized by a backup power supply (8).

FIG. 1

## BACKGROUND OF THE INVENTION

### Field of The Invention

The present invention relates to a resolver apparatus for measuring an absolute position of a rotating body, and more particularly to an absolute position measuring resolver apparatus with backup means in a power failure.

### Description of The Related Art

Heretofore, there is known a resolver apparatus having a resolver connected to a rotating body of an actuator for measuring an absolute position of the rotating body displaced from a reference angular position in which even if a power failure occurs during measurement of the absolute position, the data relating to an amount of rotation of the rotating body as measured so far is held thereby to accurately measure the absolute position of the rotating body which has changed during the measurement. In this specification and claims, the term "absolute position" is used to indicate an accumulated value of amounts of rotational movement of a rotating body from an original angular position which is signed by plus for a rotational movement in a predetermined direction and by minus for that in a reverse direction thereto. Therefore, when the rotating body is moved in a predetermined direction, for example, clockwise by one rotation and 60° in angle from the original angular position, the absolute position of the rotating body is represented by 420°. When the rotating body is first rotated clockwise by 420° and then counter-clockwise by 90°, the absolute position of the rotating body is represented by 330°.

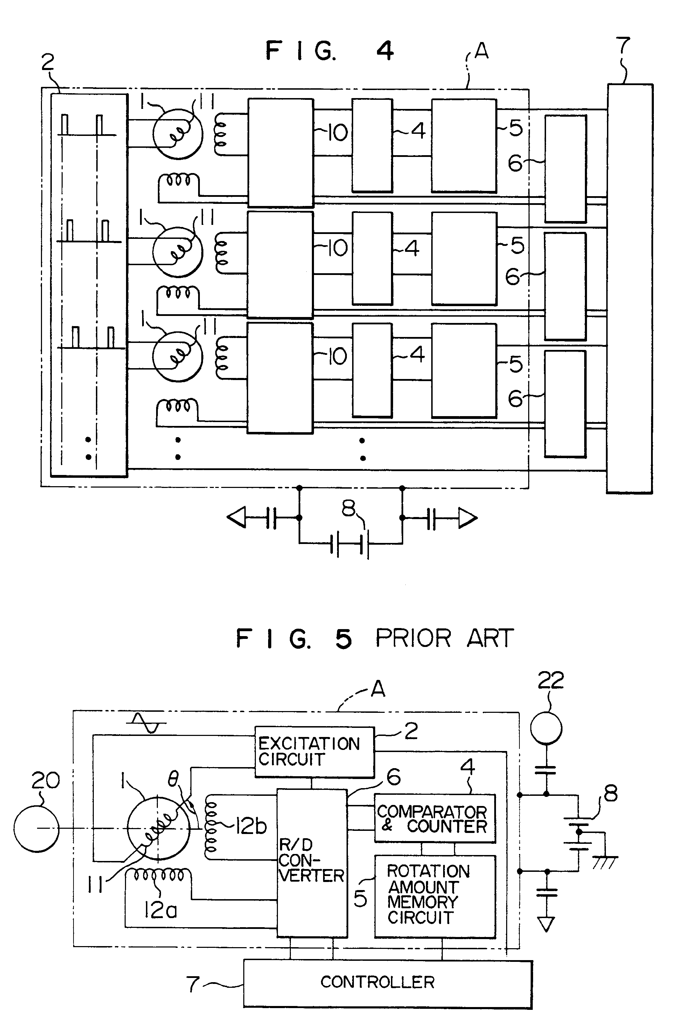

Fig. 5 shows an example of a conventional apparatus using a resolver of two poles. In Fig. 5, numeral 1 denotes a rotor of a resolver coupled mechanically with a rotating body 20 to be measured and including an exciting coil 11 which is excited by a sine wave AC current produced by an excitation circuit 2. The resolver 1 also includes a stator provided with detection coils 12a and 12b. The detection coils 12a and 12b produce sine wave resolver signals, respectively, having phases different from each other by 90° in equal periods corresponding to a half rotation of the rotor when the rotor is rotated at a constant speed. The resolver signal is converted by a resolver-digital (R/D) converter 6 into a digital signal having a value representative of a displacement angle $\theta$ ($0 < \theta < \pi$) of the rotor measured from a reference angular position or a symmetrical position separated from the reference angular position by 180° and a sign representative of a direction of the displacement (for example, a clockwise displacement is represented by "+" and a counter-clockwise displacement is represented by "-"). A comparator 4 including a counter detects each half rotation of the rotor 1 on the basis of an output signal of the R/D comparator 6 and counts by one for each half rotation. Accordingly, the counts of the comparator 6 represent an amount of rotation of the rotor represented by a number of half-rotations thereof. A rotation amount memory circuit 5 stores the amount of rotation of the rotor . A controller 7 calculates an absolute position of the rotor on the basis of the signal representative of the displacement angle $\theta$ of the rotor 1 and the amount of rotation of the rotor 1 stored in the memory circuit 5. Each of the circuits described above is normally supplied with electric power by an external DC power supply 22, while when the power supply is cut off, a backup battery 8 supplies electric power to the circuits in a backup area A as shown to hold the amount of rotation of the rotor stored in the memory circuit 5 at the time of a power failure, which is used together with the output of the R/D converter 6 for calculating the absolute position of the rotor when the apparatus is restarted.

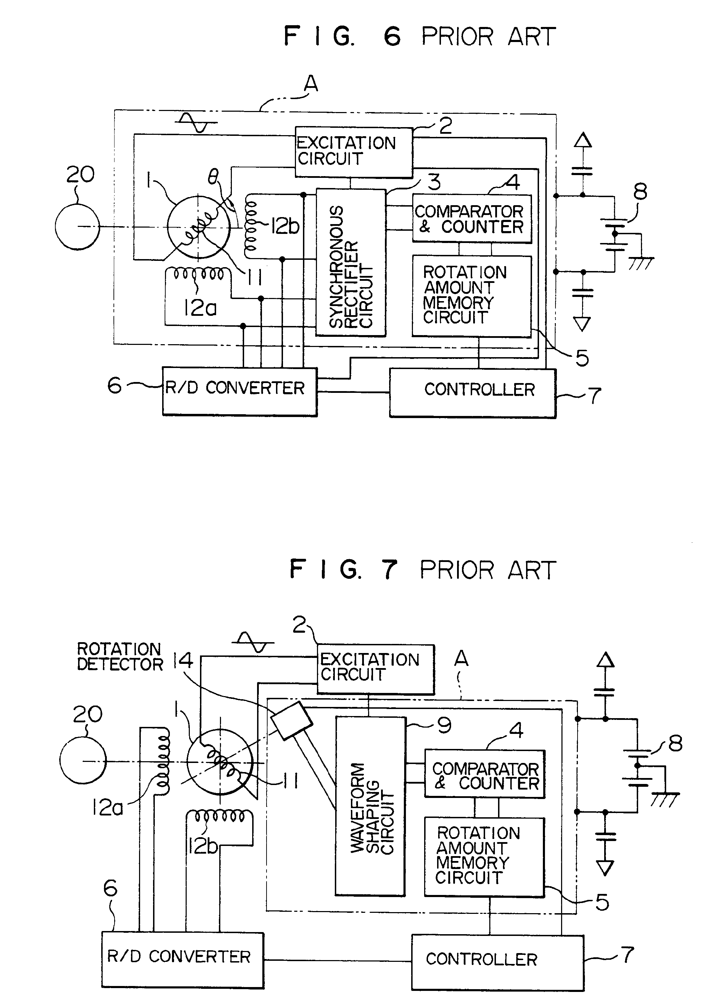

Fig. 6 shows a second example of a conventional apparatus using a resolver of two poles. In Fig. 6, the same reference numerals designate the same components as those of Fig. 5. The second example is the same as the first example of Fig. 5 except that a synchronous rectifier circuit 3 is provided for rectifying the output signals of the detection coils 12a and 12b of the resolver in synchronism with a frequency of an exciting current of the excitation circuit 2 and the comparator and counter 4 counts the amount of rotation of the rotor 1 on the basis of an output of the synchronous rectifier circuit 3. Even in the second example, the backup battery 8 supplies electric power to the circuits in the backup area A to hold the amount of rotation of the rotor stored in the memory circuit 5 at the time of occurrence of the power failure, which is used together with the output of the R/D converter 6 for calculating the absolute position of the rotor when the apparatus is restarted.

Further, Fig. 7 also shows a third example of a conventional apparatus using a resolver of two poles. In Fig. 7, the same components as those of Figs. 5 and 6 are designated by the same reference numerals. In the third example, a rotation detector 14 which is coupled with a rotor 1 of the resolver is provided to detect a rotational direction and a rotation amount of the rotor 1, and when a power failure occurs, the rotation detector 14 is backed up by a backup battery 8 to hold the rotation amount and the rotational direction at the time of occurrence of the power failure, which is used together with the output of the R/D converter 6 for calculating the absolute position of the rotor when the apparatus is restarted.

Further, in a fourth example disclosed in Japanese Patent Unexamined Publication JP-A-63-214617, the resolver is normally excited by a sine wave signal and excited by a pulse signal when a power failure occurs, so that the rotational direction and the rotation amount of the rotor are obtained on the basis of a phase difference between the exciting pulse and a detection pulse produced by the detection coils 12a and 12b.

## SUMMARY OF THE INVENTION

It is an object of the present invention to provide an absolute position measuring resolver apparatus with backup means in a power failure, which is provided with a single excitation circuit used both in a normal state and in a power failure and capable of remarkably minimizing the power consumption of the backup circuit.

According to the present invention, the resolver apparatus for measuring an absolute position of a rotating body comprises a resolver including a rotor having a sigle-phase exciting coil and adapted to be connected to the rotating body and a stator having detection coils of two phases different from each other by 90°, an excitation circuit for exciting the exciting coil by a pulse signal having a selected frequency, a sample and hold circuit for sampling and holding output signals of the detection coils in synchronism with the frequency of the pulse signal thereby to produce two AC signals having phases different from each other by 90°, first means for converting the AC signals produced by said sample and hold circuit into rectangular wave signals and obtaining a first value indicative of an amount of rotation of the rotor by counting a number of rectangular waves of one of the rectangular wave signals, memory means for storing the first value, second means for obtaining a second value indicative of a displacement angle of the rotor from a predetermined reference angular position based on the two AC signals, third means for calculating a third value indicative of an absolute position of the rotor based on the first value stored in the memory means and the second value obtained by the second means, means for connecting the excitation circuit, the sample and hold circuit, the first, second and third means and the memory means to an external power supply, and backup means for connecting a backup area including at least the excitation circuit, the sample and hold circuit, the first means and the memory means to a backup power supply when the external power supply is cut off.

In a preferred embodiment of the present invention, the frequency of the pulse signal for exciting the exciting coil changes as a function of a rotating speed of the rotating body.

Further, when the present invention is applied to a resolver apparatus including a plurality of resolvers, a multi-phase pulse generator is used to excite exciting coils for the respective resolvers by pulse signals having phases different from each other.

Since the resolver apparatus of the present invention excites the exciting coil of the resolver by a pulse signal-produced by the excitation circuit included in the backup area, the power consumption can be reduced greatly and the life of the backup battery can be lengthened extremely as compared with the excitation using the usual sine wave signal.

Further, if it is adapted that the frequency of the pulse signal for excitation is changed in accordance with the rotating speed of the rotor of the resolver and the detection signal is held by the sample and hold circuit operating in synchronism with the excitation circuit, a resolver signal of substantially sinusoidal wave is always produced.

With the resolver apparatus including a plurality of resolvers, if it is configured that a multi-phase pulse signal is produced by the excitation circuit and the exciting coils are excited by pulse signals having phases different from each other, respectively, a voltage variation in output of the backup battery can be minimized and the life of the backup battery can be extended.

## BRIEF DESCRIPTION OF THE DRAWINGS

Fig. 1 is a block diagram showing a circuit configuration of an embodiment of the present invention;

Fig. 2 is a diagram showing an exciting pulse signal, sine wave signals obtained by sampling and holding signals produced by two detection coils with two poles, and rectangular wave signals obtained by waveform-shaping the sine wave signals;

Fig. 3A shows waveforms of voltage and current applied to the excitation coil as excited by the sine wave voltage;

Fig. 3B shows waveforms of voltage and current applied to the excitation coil as excited by the pulse voltage;

Fig. 4 is a block diagram showing a circuit configuration of another embodiment of the present invention; and

Figs. 5, 6 and 7 are diagrams showing circuit configurations of conventional apparatuses.

## DESCRIPTION OF THE PREFERRED EMBODIMENTS

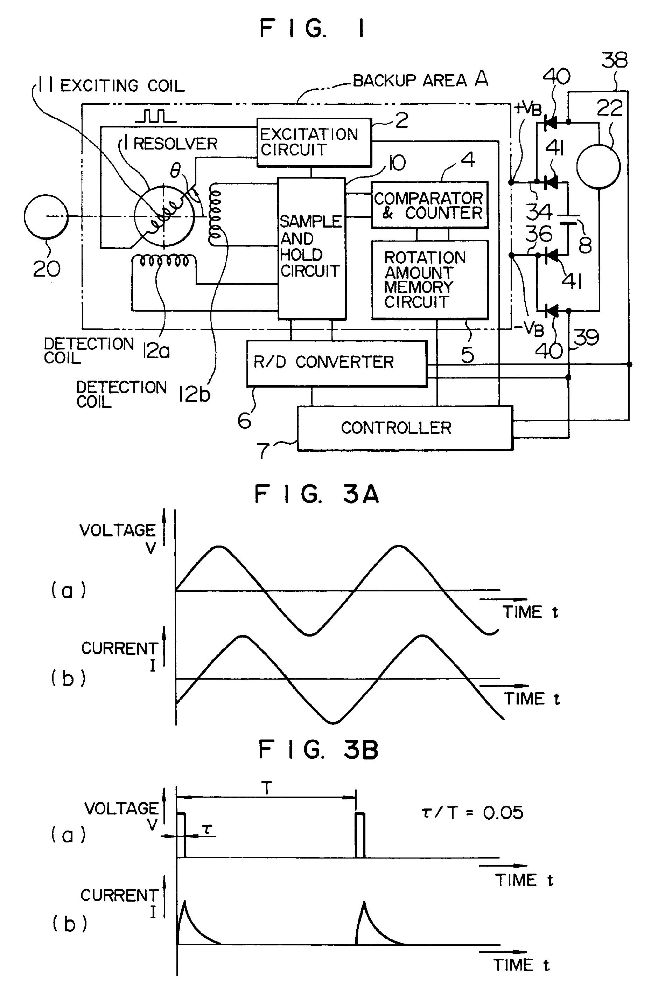

An embodiment of the present invention applied to a resolver of two poles is now described with reference to Figs. 1 to 3.

In Fig. 1 showing a circuit configuration of the embodiment, a resolver includes a rotor 1 coupled with a rotation axis of a rotating body 20 to be measured and having a single-phase exciting coil 11 and a stator provided with detection coils 12a and 12b of two phases different from each other by 90°. The exciting coil 11 is excited by an excitation pulse signal Vi of variable frequency which is produced by an excitation circuit 2 and has a waveform shown by Fig. 2(a). A sample and hold circuit 2 samples and holds signals produced by the detection coils 12a and 12b in synchronism with the frequency of the excitation pulse signal. The sampled and held voltage signals $V_{0a}$ and $V_{0b}$ have, as shown in Figs. 2(b) and 2(c), sinusoidal waveforms having phase difference of 90° between them and equal periods corresponding to a half rotation of the rotor when the rotor is rotated at a constant speed. These voltage signals, as called hereinafter as A-phase sine wave signal and B-phase sine wave signal, respectively, are substantially the same as those sine wave signals as obtained by rectifying the output signals of the detection coils in synchronism with the frequency of the excitation voltage when the exciting coil is excited by a conventional sine wave voltage.

As shown in Figs. 2(b) and 2(c), the voltage signals Voa and Vob include many steps exactly corresponding to the sampling frequency of the sample and hold circuit. These signals are, however, regarded as substantially sine wave signals when the sampling frequency is sufficiently high as compared with the rotation speed of the rotor. In a preferred embodiment of the present invention, a controller 7 determines the rotation speed of the rotor on the basis of an output signal of an R/D converter 6 described later and controls the excitation circuit 2 to produce a pulse signal having a frequency variable as a functions of the rotation speed of the rotor. The frequency of the pulse signal is preferably proportional to the rotation speed of the rotor. The voltages Voa and Vob more approximate to sine wave signals as the frequency of the excitation pulse signal is increased. However, since the power consumption of the excitation circuit is also increased as the frequency is increased, the frequency is usually selected in a range of 1 KHz to 20 KHz in consideration of the power consumption of the excitation circuit and a range of rotation speed of the rotating body to be measured.

A comparator and counter 4 converts the A-phase sine wave signal and the B-phase sine wave signal into rectangular wave signals Va and Vb as shown in Figs. 2(d) and 2(e), respectively and detects a half rotation of the rotor and a direction of the rotation on the basis of the rectangular wave signals to count up or down by "1" in each half rotation. Accordingly, the counts of the comparator and counter represent the number of times of the half rotation of the rotor, that is, an amount of rotation. More particularly, the comparator and counter 4 functions for each of the A-phase and B-phase sine wave signals to produce a high level signal "1" when an instant value of the associated sine wave signal is larger than 0 and a low level signal "0" when the instant value of the associated sine wave signal is smaller than 0 thereby to convert the sine wave signals into the rectangular wave signals. Further, the rotation direction of the rotor 1 is determined based on the phases of the two sine wave signals and the value "1" in each half rotation of the rotor is counted with a sign of plus or minus depending on the detected direction of rotation, or depending on whether the rectangular wave signal Vb is at a low level or high level when the rectangular wave signal Va changes from a low level to a high level in the same manner as that in the conventional up-and-down counter. Then, the count of the comparator 4 representing the rotation amount of the rotor is stored in a rotation amount memory circuit 5.

The R/D converter 6 produces a digital signal having a value representative of a displacement angle $\theta$ $(0 < \theta < \pi)$ from a predetermined reference angular position or a symmetrical position displaced from the reference angular position by 180° and a sign corresponding to the rotation direction of the rotor on the basis of the A-phase sine wave signal and the B-phase sine wave signal produced by the sample and hold circuit 10. The controller 7 calculates an absolute position of the rotor on the basis of the digital signal representative of the displacement angle of the rotor produced by the R/D converter 6 and the counts of the comparator 4 stored in a rotation amount memory circuit. Further, when the pulse frequency produced by the excitation circuit is variable as a function of the rotation speed of the rotor, the controller 7 calculates the rotation speed of the rotor from the output signal of the R/D converter 6 as described above and controls the pulse frequency of the excitation circuit 2 by using a function generator, for example, on the basis of the rotation speed of the rotor.

Further, when it is required to change the excitation frequency as a function of the rotation speed of the rotor during a failure of the external power supply, the excitation frequency is controlled by using the output of the comparator and counter 4.

The excitation circuit 2, the sample and hold circuit 10, the comparator and counter 4, the rotation amount memory circuit 5, are normally energized by an external DC power supply 22 through diodes 40 and conductors 34 and 36 and the R/D converter 6 and the controller 7 are normally energized by the external DC power supply 22 through conductors 38 and 39. When the power supply is cut off by a failure, a backup power supply 8, which is arranged parallel with the external DC power supply 22, supplies electric power through diodes 41 and the conductors 34 and 36 to a backup area A including the excitation circuit 2, the sample and hold circuit 10, the comparator and counter 4 and the rotation amount memory circuit 5, while the R/D converter 6 and the controller 7 receive no power supply during the power failure. However, a value indicative of the amount of rotation of the rotor, which is detected at the time of the power failure with addition of any amount of rotation of the rotor after the power failure, is held in the memory circuit 5. Accordingly, when the apparatus is restarted, the absolute position of the rotor is calculated by the controller 7 by using the value stored in the memory circuit 5 and the digital signal indicative of the displacement angle of the rotor outputted by the converter 6.

The reference angular position which is an origin of the absolute position of the rotor is determined at a position where the displacement angle θ represented by the output of the R/D converter 6 is 0. Further, when the counter of the comparator 4 is first reset to 0, an absolute amount of movement of the rotor from the reference angular position is calculated in the subsequent measurement. Since the backup area is energized, even if the measurement is intermittently carried out, during the interruption of measurement, the continuity of the measured amount is ensured. If a value representative of the absolute position of the rotor obtained at the completion of one cycle of measurement is stored in the controller and the stored value is subtracted from a measured value obtained by a next cycle of measurement, the rotation amount of the rotor for each cycle of measurement can be obtained.

The life of the backup battery 8 for the backup area A is substantially depending on the power consumption of the excitation circuit 2. In this case, since the excitation circuit 2 is excited by the pulse signal, the power consumption is very low as compared with the conventional excitation using the sine wave signal.

For example, the excitation develops voltage and current waveforms, as shown in Fig. 3A, for the sine wave excitation, and voltage and current waveforms, as shown in Fig. 3B, for the pulse excitation with a duty $\tau/T = 5\%$. When an excitation voltage is 6 volts and an output voltage of the detection coil is 1 volt, the excitation current and power consumption are 20 mA and 252 mW, respectively, for the sine wave excitation and are 5 mA and 4.5 mW, respectively, for the pulse excitation. Thus, the power consumption for the pulse excitation is about one fiftieth of that for the sine wave excitation.

Accordingly, the life of the backup battery is remarkably extended by exciting the excitation circuit by a pulse signal.

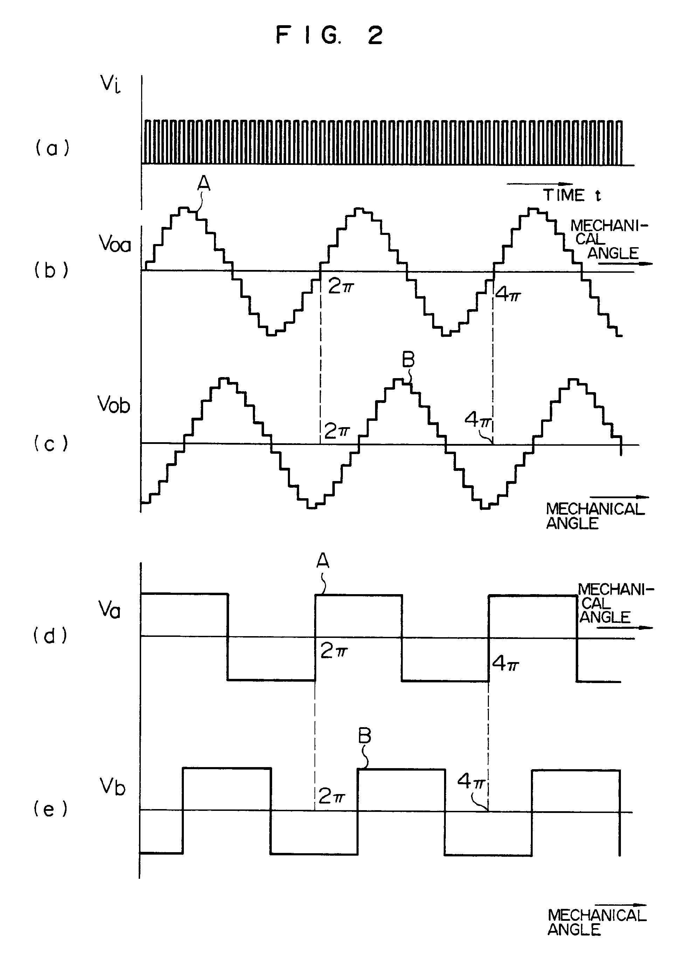

Fig. 4 shows a resolver apparatus including a plurality of resolvers in which the backup operation in a power failure is made by a single backup battery 8. An excitation circuit 2 produces a multi-phase pulse signal and the exciting coils are excited by pulse signals having phases different from each other. Accordingly, since the exciting coils 11 are excited by the pulse signals at different timings, a variation of the output of a power supply can be suppressed small and the life of the backup battery 8 is lengthened.

As described above, according to the present invention, the following merits are attained.

(1) Since the excitation is made by a pulse signal, a loss due to the excitation is very small as compared with the conventional sine wave excitation and the power consumption of the backup area is reduced. Accordingly, for the normal resolver, the backup operation can be made sufficiently by a small number of dry batteries.

(2) When the frequency of the pulse for the excitation is changed as a function of the rotation speed of the rotation axis, two stable sine wave signals are always obtained by the sample and hold circuit so that stable and accurate positioning is attainable.

(3) When the plurality of resolvers are excited, a multi-phase pulse signal is produced by one excitation circuit and the exciting coils of the resolvers are excited by pulse signals having phases different from each other, so that a variation of the output of the backup battery can be reduced and the life of the battery can be extended.

## Claims

1. A resolver apparatus for measuring an absolute position of a rotating body comprising:

    a resolver including a rotor (1) having a single-phase exciting coil (11) and adapted to be connected to the rotating body (20) and a stator having detection coils (12a, 12b) of two phases different from each other by 90°;

    an excitation circuit (2) for exciting the exciting coil by a pulse signal having a selected frequency;

    a sample and hold circuit (10) for sampling and holding output signals of the detection coils in synchronism with the frequency of the pulse signal thereby to produce two AC signals having phases different from each other by 90°;

    first means (4) for converting the AC signals produced by said sample and hold circuit into rectangular wave signals and obtaining a first value indicative of an amount of rotation of the rotor by counting a number of rectangular waves of one of the rectangular wave signals;

    memory means (5) for storing the first value;

    second means (6) for obtaining a second value indicative of a displacement angle of the rotor from a predetermined reference angular position based on the two AC signals;

    third means (7) for calculating a third value indicative of an absolute position of the rotor based on the first value stored in the memory means (5) and the second value obtained by the second means (6);

    means (24, 25) for connecting the excitation circuit (2), the sample and hold circuit (10), the first (4), second (6) and third (7) means and the memory means (5) to an external power supply (22); and

    backup means (25, 30, 32) for connecting a backup area (A) including at least the excitation circuit (2), the sample and hold circuit (10), the first means (4), and the memory means (5) to a backup power supply (25) when the external power supply is disabled.

2. A resolver apparatus according to claim 1, wherein the frequency of said pulse signal is variable as a function of a rotation speed of the rotor.

3. A resolver apparatus according to claim 1, wherein the frequency of the pulse signal is proportional to a rotation speed of the rotor.

4. A resolver apparatus comprising:

    a plurality of resolvers each including a rotor (1) having a single-phase exciting coil (11) and connected to the rotating body (20) and a stator having detection coils (12a, 12b) of two phases different from each other by 90°;

    a first circuit (2) for exciting said excitation coils of said plurality of resolvers by a plurality of electric pulses having selected frequencies and phases different from each other, respectively;

    a second circuit for calculating an absolute value of an amount of rotation of said rotor on the basis of outputs of said detection coils for two phases;

    means for connecting an external power supply (22) to said first and second circuits; and

    means for connecting a selected area including said first circuit and at least a part of said second circuit to a backup power supply for energizing said area when said external power supply is disabled.

5. A resolver apparatus comprising:

    a resolver (1) including a rotor having an exciting coil (11) for one phase and adapted to be coupled with a rotating body to be measured and a stator having detection coils (12a, 12b) for two phases different from each other by 90°;

    a first circuit for exciting said exciting coil by an electrical pulse having a selected frequency;

    a second circuit for calculating an absolute value of an amount of rotation of said rotor on the basis of outputs of said detection coils for two phases;

    means for connecting an external power supply (22) to said first and second circuits; and

    means for connecting a selected area including said first circuit and at least a part of said second circuit to a backup power supply (8) for energizing said area when said external power supply is disabled.

6. A resolver apparatus according to Claim 5, wherein the frequency of the pulse signal is variable as a function of a rotation speed of said rotor.

7. A resolver apparatus according to Claim 6, wherein the frequency of the pulse signal is proportional to a rotation speed of said rotor.

# F I G. 1

# F I G. 3A

VOLTAGE
V

(a)

TIME t

CURRENT
I

(b)

TIME t

# F I G. 3B

$\tau / T = 0.05$

VOLTAGE
V

(a)

T

$\tau$

TIME t

CURRENT
I

(b)

TIME t

# F I G. 2

# FIG. 4

# FIG. 5 PRIOR ART

## F I G. 6 PRIOR ART

## F I G. 7 PRIOR ART